# EUROPEAN PATENT SPECIFICATION

(11) **EP 4 388 235 B1**
(45) Date of publication and mention of the grant of the patent: **16.07.2025**
(21) Application number: 22765177.5
(22) Date of filing: 16.08.2022
(51) Int. Cl.: F16L 1/23

(54) **METHOD FOR DEPLOYING AN ELONGATE MEMBER AND TENSIONER SYSTEM**
VERFAHREN ZUM EINSATZ EINES LÄNGLICHEN ELEMENTS UND SPANNSYSTEM
PROCÉDÉ DE DÉPLOIEMENT D'UN ÉLÉMENT ALLONGÉ ET SYSTÈME DE TENDEUR

(30) Priority: 19.08.2021 GB 202111934
(43) Date of publication of application: 26.06.2024
(73) Proprietor: Enerfloat Ltd, Aberdeen AB10 1JB (GB)
(72) Inventor: WATT, Michael John, Aberdeen AB10 1JB (GB)
(74) Representative: HGF
(86) International application number: PCT/GB2022/052128
(87) International publication number: WO 2023/021282

(56) References cited:
- WO-A1-2007/108673
- AU-A1- 2019 417 977
- GB-A- 2 591 786
- KR-A- 20130 105 023
- US-A- 5 197 716
- US-B1- 7 226 244
- US-B2- 9 835 268

## Description

The present invention relates to a method and system for deploying an elongate member, such as a cable, underwater from a vessel.

It is necessary to deploy cables and other elongate members underwater for a variety of reasons. For instance, subsea cables are used to transmit current generated by offshore wind turbines, or in the telecommunications industry, to carry telecommunications signals across bodies of water. Subsea elongate members are also used in other industries, for example, in the oil and gas industry, such as umbilicals or risers connected to subsea wells.

The movement, especially heave, of a vessel deploying the elongate members can affect the deployment thereof. There are two main limiting factors during subsea installation especially in a conventional S-lay configuration; the minimum allowable radius of curvature and the avoidance of axial compression at seabed.

To work within acceptable parameters, it is known to provide a tensioner on the vessel to appropriately tension the elongate members as they are deployed from the vessel. The tensioners may comprise two opposing belts driven by respective rollers which capture the elongate member between the belts and direct it towards an exit chute from the vessel. Larger vessels generally provide a more stable and slower moving platform, allowing cable lay operations to continue in higher sea states than smaller vessels.

Whilst generally satisfactory, the known equipment to tension and deploy the elongate members is costly and more suited to larger vessels, such that the overall operation can incur significant expense.

US 9,835,268 discloses a marine pipeline installation system for laying an offshore pipeline and/or installing a subsea riser and includes a pipeline launch tower, a pipeline guide provided at an elevated position for guiding said pipeline to the pipeline launch trajectory along said tower, one or more tensioners, an abandonment and recovery (A&R) system including at least one A&R cable and associated A&R winch and a sheave arrangement with one or more sheaves supported by the pipeline launch tower at an upper position thereof. An auxiliary trolley is provided which is adapted to support the weight of the launched pipeline and which is movable along a rail in the pipeline launch trajectory when the one or more tensioner frames are in the retracted non-operable position, from a position above the uppermost tensioner to a position below the lowermost tensioner, the rail being supported by the pipeline launch tower.

GB 2,591,786 discloses a flexible-elongate-element clamp for holding a flexible-elongate element when overboarding or onboarding the flexible-elongate element from or to a vessel. US 5,197,716 discloses a marine cable deployment apparatus for deploying marine seismic cable from a ship which reduces tension force on the cable at the cable storage reel when the cable storage reel (drum) is winding out the cable.

AU 2019/417977 relates to a method for laying and/or recovering a flexible line in a body of water. The method comprises at least one phase of quasi-immobilisation or immobilisation of the line comprising the following steps: - activating the motor of at least one upper tensioner and/or of at least one lower tensioner by means of a control unit in order to apply a torque for retaining the line against its own weight to the movement member of the upper tensioner and/or of the lower tensioner ;- at least spot controlling, by means of the control unit, at least one motor of an upper tensioner and/or of a lower tensioner in order to move a movement member of the upper tensioner and/or of the lower tensioner or to modify the retaining torque applied to the movement member of the upper tensioner and/or of the lower tensioner.

WO 2007/108673 discloses a marine pipeline installation system for laying an offshore pipeline and/or installing a subsea riser, the system at least allowing to carry out the reel lay method, wherein the system comprises : one or more storage reels for storage of pipeline, a pipeline launch tower, a pipeline guide at an elevated position for guiding said pipeline along said tower, one or more tensioners, each tensioner comprising a tensioner frame and multiple tracks supported by said tensioner frame, said tracks being adapted for engaging the pipeline and supporting at least part of the weight of the launched pipeline, the tensioner frame being supported by said tower via an associated support assembly.

US 7,226,244 discloses a vessel with a tower adapted to be inclined for handling of tubulars mad of a vessel, a tower with a mast that can be inclined, a pipe reel for storing passing tubulars, a strut with a sleeve for engaging and enabling tower inclination, and a tensioner mounted moveably on the mast for receiving the tubular wherein the tensioner is made of two connectors connected to the mast, a frame that engages the connectors, two track bodies that engage the tensioner frame and the tubular, and an adjustable vertical support adapted to modify the relationship between the force transmitted by the adjustable vertical support onto the tensioner and the motion of the tensioner relative to the mast.

KR 2013/0105023 discloses a tensioner comprising tracks, multiple motors, a generator, and a tension measuring unit. The tracks descend a pipe to be laid underwater at a constant speed. The motors power the tracks. The generator generates electricity by receiving power from one or more drive shafts connected to the motors. The tension measuring unit measures the tension applied to the descending pipe.

An object of the present invention is to provide improved equipment/method for deployment of elongate members and/or equipment/method more suited for smaller vessels.

According to a first aspect of the invention, there is provided a method of deploying a flexible elongate member into water comprising:
(i) suspending a tensioner system underwater from a winch apparatus, the winch apparatus mounted on a deployment frame which is in turn mounted on a vessel on the water;
(ii) the winch apparatus having active heave compensation to at least in part, offset movement of the vessel in the water, and reduce the movement of the tensioner system relative to the vessel;
(iii) feeding the elongate member from above the water to under the water and into, through and out of the tensioner system, thus deploying the elongate member under the water.

Flexible elongate members include cables, risers, umbilicals. They are flexible and so are able to be stored in a continuous length of at least 100m, optionally at least 500m, coiled on a reeled storage device or in a basket.

Preferred embodiments deploy a cable.

The method may be performed in various water depths. For example, relatively shallow depths of up to 100 m, or up to 400 m. Or deeper water such as between 400 and 1000m or even deeper.

The elongate member may be deployed in an S-lay configuration.

The elongate member may be placed on or in the seabed (i.e. may be later buried).

The deployment frame may comprise a crane.

The vessel normally has a vessel chute over which the elongate member is paid out during operations.

The system may be used in combination with a remotely operated vehicle (ROV) to observe the positioning of the system so the elongate member can be deployed relative to the vessel, or for example as close as possible to the target position.

Embodiments of the present invention may be used in combination with underwater acoustic positioning and/or thrusters (which would largely negate the need for using an ROV). Ultrashort baseline underwater acoustic positioning (USBL) may be particularly useful.

An advantage of using USBL positioning is that the tensioner system does not need to stop due to poor visibility subsea when using an ROV, or a ROV losing the target.

The tensioner system may be suspended between 10m above the seabed and 10m below the surface. It may be suspended at least 100m above the seabed. It may be suspended at least 100m below the surface.

According to a further aspect of the invention, there is provided a tensioner system suitable for use underwater having a tensioner comprising:
- an elongate member entry;
- an elongate member exit;
- drive means for driving an elongate member from said entry to said exit;
a motor for driving the drive means, and further comprising an angle entry sensor to determine the movement and/or angle of the elongate member relative to the tensioner system at the entry, and/or an angle exit sensor to determine the movement and/or angle of the elongate member relative to the tensioner system at the exit.

The tensioner system of the further aspect of the invention can be used in the method according to the first aspect of the invention and optional steps of that method are independently optional steps for use with the tensioner system.

The tensioner system can also hold or clamp the elongate member to prevent movement.

For certain embodiments, the sensor(s) can be in the form of camera(s) with suitable software for determining the angle of the elongate member relative to the tensioner.

The system may include an arcuate entry chute for resisting the elongate member from exceeding a minimum bend radius as it enters the elongate member entry.

Similarly, the system may include an arcuate exit chute for resisting the elongate member from exceeding a minimum bend radius as it exits the elongate member entry.

The minimum bend radius (MBR) may be from 0.5m to 5m. Optionally from 2 to 5 m, more optionally from 3 to 4m. The MBR may be relatively low for telecoms cables and larger for flexible flowlines.

The arcuate chutes together can be in the form of a semi-circular apparatus known as a quadrant.

The drive means may comprise a two-track tensioner.

The drive means may comprise a wheel-pair tensioner.

The drive means may comprise opposing rollers and optionally opposing belts driven by the rollers, the belts configured to capture the elongate member therebetween.

An ejector is usually provided to separate the elongate member from the drive means (especially at least one belt) and eject it therefrom. The ejector may be retractable, and optionally in the form of a ram or lever.

The system may comprise a locking mechanism to lock the elongate member in position, rather than, at the time of locking, feeding the elongate member through the system.

The motor for the drive means may comprise a hydraulic motor or an electrical motor.

Such a hydraulic motor and optionally other any other hydraulic systems included (for example to drive a retractable ejector) usually include pressure-compensators, to function at the varying pressures at varying water depths.

The tensioner system may include electrical systems. Such electrical systems are also normally rated for subsea use.

The drive means and motor may be provided in a watertight housing (watertight at the depths to be used).

The tensioner system can comprise subsea thrusters. It may also include at least one of a camera, a light, a sonar device, a gyroscope and a compass.

The system may also include an obstacle avoidance sonar configured to adjust the tensioner system position in use in response to detected obstacles.

Embodiments of the present invention will now be described, by way of example only, with reference to the accompanying figures, in which:
Figure 1 is a schematic overview of the tensioner system of the present invention in use;
Figure 2 is an enlarged schematic view of the Figure 1 embodiment;
Figure 3 shows plotted cable compression results obtained by global dynamic analysis;
Figure 4 shows plotted cable tension comparison results obtained by global dynamic analysis;
Figure 5 shows plotted cable minimum bend radius (MBR) comparison results obtained by global dynamic analysis;
Figure 6 shows plotted active heave compensation (AHC) maximum velocity results obtained by global dynamic analysis; and,
Figure 7 shows active heave compensation maximum tension results obtained by global dynamic analysis.

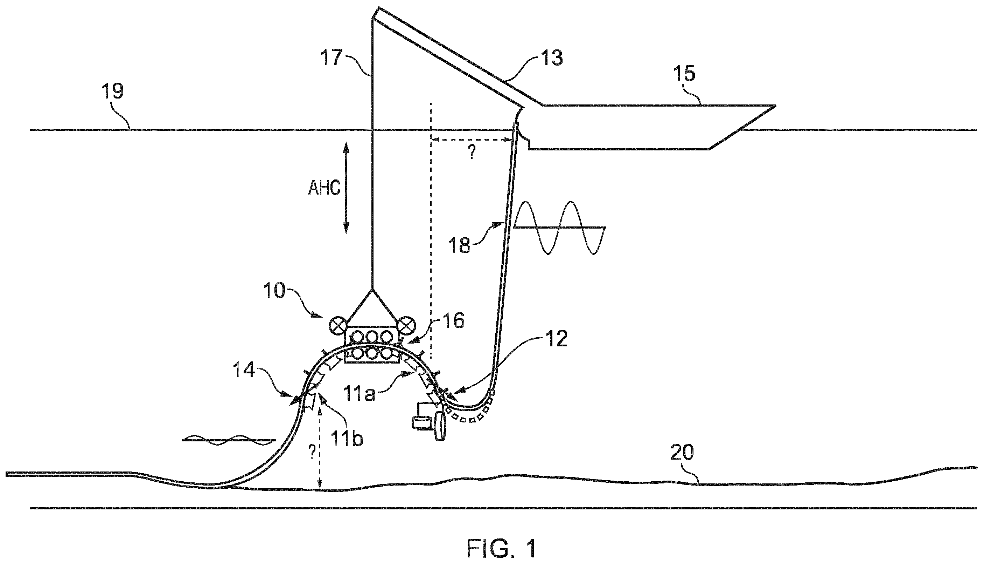

Figure 1 shows a tensioner system 10 according to one aspect of the present invention comprising a tensioner 16, an entry sensor 12 at a cable entry point, and an exit sensor 14 at a cable exit point. The entry/exit sensors 12/14 measure the angle at which a cable 18 being deployed enters/exits the tensioner 16 and its movement. The system 10 is powered by a motor (not shown).

The system includes arcuate entry chute 11a and arcuate exit chute 11b to support the cable as it enters and exits the tensioner 16, and resist bending past its minimum bend radius. The chutes may be provided as part of a subsea quadrant.

The tensioner system 10 is suspended on a wire or umbilical 17 from a crane (or A-frame) 13 which in turn is mounted on a vessel 15. The crane 13 has active heave compensation (AHC) functionality meaning that the wire 17 can be automatically adjusted to compensate for surface, floating vessel movement. The movement of the suspended tensioner system relative to seabed is significantly reduced in relation to the movement of the surface, floating vessel relative to seabed. Techniques which can be used for AHC are known in the art especially for lowering equipment such as wellheads subsea and are available from, for example, Macgregor (macgregor.com) or Huisman (huismanequipment.com).

Before use of the tensioner system 10, the cable 18 to be deployed is passed through a cable entry point end in the tensioner 16 and clamped while the tensioner system 10 is on the deck of the vessel 15.

The tensioner system 10 is then deployed subsea from the surface of the body of water 19 to a predetermined position. In this way, distance from the vessel to the tensioner system in use is less than the vessel to the seabed as with known systems. Accordingly, an advantage of embodiments of the present invention is that topside axial tension is reduced, in addition to topside side wall pressure being reduced.

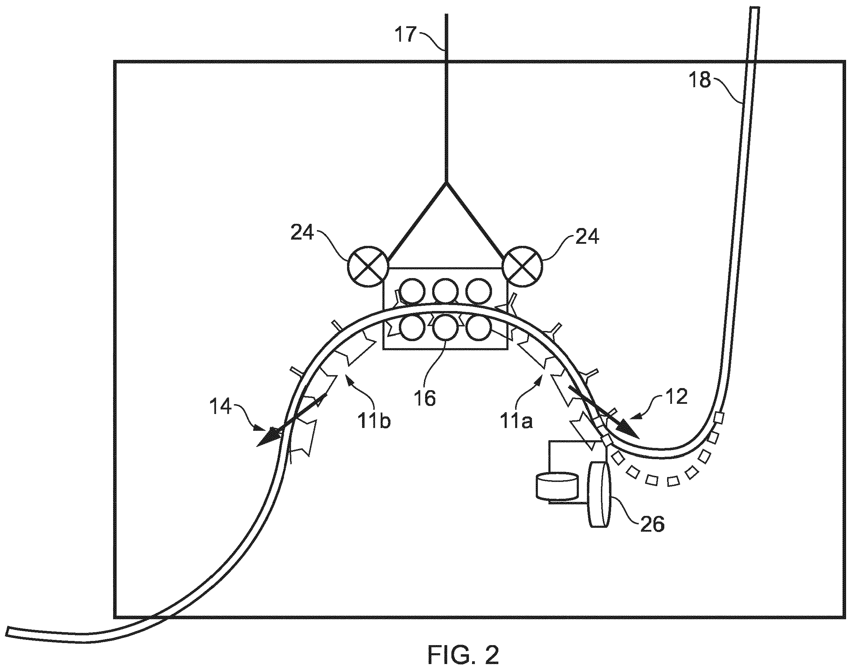

Figure 2 shows the tensioner system in more detail. Optional thrusters 24 are connected to the tensioner 16, which may be in the form of powered rotating blades. Suitable thrusters may be obtained from, for example, Forum Energy Technologies. The thrusters may be hydraulic thrusters, or electric drive systems.

A survey sensor package 26 is connected to tensioner 16 such as the chute 11a. The survey sensor package 26 aids the remote operation of the tensioner system 10. It may include cameras, lights, sonar devices, gyroscope, compass or a combination thereof.

The cable may be fed out from a reel (not shown) on the vessel, over a vessel chute (not shown), and then take up the configuration shown in Figure 1. As the vessel 15 moves forward, the cable continues to be paid out, and rests on the entry chute 11a, enters the tensioner 16 subsea before being deployed via the exit chute 11b onto the seabed 20.

A retractable ejector (not shown) is usually provided to separate the cable from the belt and eject the cable from the tensioner 16. The ejector may be a ram or lever.

The active heave compensation of the crane allows the tensioner 16 and cable 18 between the tensioner 16 and seabed to be relatively static in the water column. An advantage of this portion of the cable 18 remaining static is that it experiences minimal change in radius and tension at seabed touchdown point. Since the system in use is suspended in water the cable weight and therefore cable tension experienced at the vessel chute and the entry chute 11a is reduced. Moreover, since the cable hangs between the vessel chute and device entry chute 11a it experiences minimal compression, irrespective of vessel motion.

By providing a means for detecting and measuring the angle or movement of the cable 18 as it enters the tensioner 16, this allows an operator, for example, on the surface floating vessel, to adjust the position of the cable 18 relative to the surface floating vessel 15 to maintain the desired entry angle of the cable 18 as it enters the tensioner 16. Similarly, by including a means for detecting the angle of the subsea cable 18 as its exits the tensioner 16, an operator may be able to adjust the speed of the tensioner 16 that is adjusted relative to the surface floating vessel 15 to maintain the desired exit angle of the cable 18 from the tensioner 16. Consequently, more control over the lay accuracy may be obtained and therefore a more accurate lay of the cable 18 may be achieved.

The tensioner may be automated such that it can be operated without human intervention. For example, the automated tensioner may comprise a sensor or a number of sensors which measure various parameters as set by an operator which allows the tensioner to function automatically. Speed, angle and/or movement sensors can be used to provide feedback to a control system, which adjusts the tensioner 16 speed and/or the speed of a reel/carousel/tensioner on the vessel 15, that is responsible for controlling the speed of cable 18 payout from the vessel. Automated cable tensioners are known in the art and can be purchased from, for example, MacArtney Underwater Technology (macartney.com).

Whilst semi-circular in shape, unpowered so-called subsea quadrants are known in the art and can be purchased from, for example, Ardmore Craig Design (ardmorecraig.com).

The sensors for measuring the angle of entry and exit of the cable in the tensioner system may be an off-the-shelf sensor commercially available from, for example, Soil Machine Dynamics (smd.co.uk). A camera may be used to automatically sense the movement or angles as well.

The sensors can be used to create a feedback loop of the measured parameters. An advantage of the feedback loop is that it can be used to control the speed of the lay of the cable, among other parameters, either to an operator who manually adjusts speed to compensate, or it can be used for an automated response as described above.

The system may also comprise a cable approach sensor, which detects when the cable approaches the seabed touchdown point. Continuous feedback from the cable approach sensor can enable quicker topside response times compared with ROV monitoring seabed touchdown point and layback.

Embodiments of the present invention may also be used with obstacle avoidance sonar connected to the tensioner system. Advantageously, the vessel position may be adjusted during the lay of the cable in order to avoid any objects detected by the obstacle avoidance sonar.

The system may have the option to "lock" (for example, maintain the cable in one position) and/or "drive" (for example, move the cable using the tensioner). This may mean that the weight of a Cable Protection System (CPS) at a second end of the subsea cable can be influenced and said second end no longer has to be "weight balanced". Advantageously, this reduces the likelihood of the cable dragging due to the weight of CPS. This may mean that an imbalance of weight between one side of the tensioner and the other could be compensated for by stopping or slowing the tensioner. An example could be where a Cable Protection System (CPS) is pulled into a Wind Turbine Generator (WTG) foundation. Advantageously this could reduce the straight line approach distance required at foundations due to the weight imbalance causing the nearest alter course in the lay route to pull and drag on the seabed, pulling the cable out of the lay corridor.

In certain applications, the tensioner system can also be used to restrict movement, since it is clamped to the cable. This could be advantageous for an imbalance scenario described above but also for a cable repair, for example, where the vessel is stationary for days on end. The purpose of the tensioner system in this scenario would then be to limit dynamic movement of the cable whilst holding station, rather than while laying the cable on the seabed.

### Experimental

Global dynamic analysis has been performed to provide a proof of concept for a tensioner system according to the present invention.

Industry standard OrcaFlex 11.0e has been used to make a comparative assessment of cable lay workability for a typical scenario both with and without the deployment of a tensioner system according to the present invention.

An initial screening analysis was completed to determine suitable catenary configurations, followed by more detailed dynamic analysis.

### Model setup

Global dynamic analysis models were set up in line with standard industry practices to provide a robust assessment of cable lay workability.

### Cable

The cable parameters, Table 2-1, are representative of a typical subsea 3x150 mm² cable design, selected for the analysis as the relatively low bend stiffness can often result in challenges maintaining the minimum bend radius (MBR) when laying in more severe sea states.

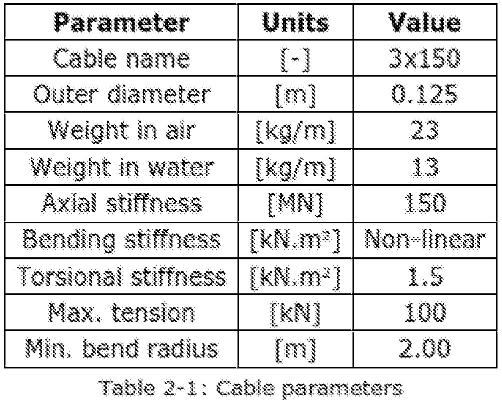

### Vessel

A cable lay barge, Table 2-2, was selected for the analysis to assess and demonstrate the improved workability offered by embodiments of the present invention when deployed from a vessel with typically limited operability in more severe sea states.

### Subsea Tensioner Powered Quadrant

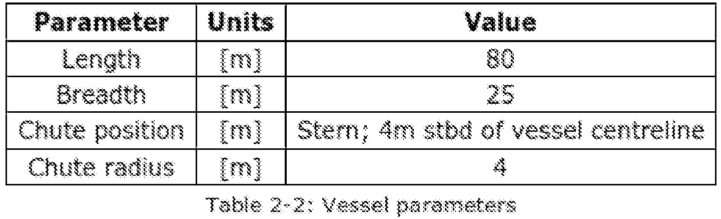

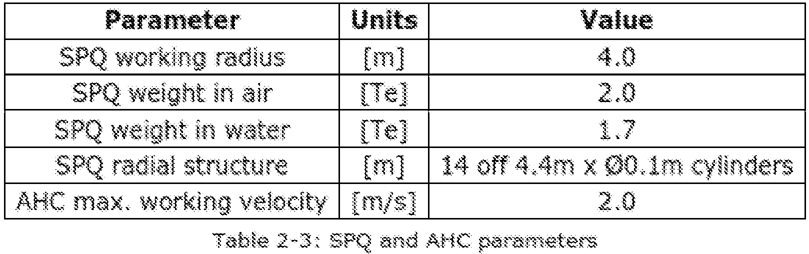

The subsea tensioner system and associated active heave compensation (AHC) deck equipment parameters used for the analysis are presented in Table 2-3. The tensioner system may herein be referred to as a Subsea Powered Quadrant (SPQ).

### MetOcean

Regular wave analysis has been used with wave period and directions selected to coincide with vessel response peaks. A range of regular wave heights, 3.80-5.70m, have been considered, which correspond to the Hmax of sea states with significant wave heights (Hs) 2.0-3.0m respectively. Analysed MetOcean parameters are summarised in Table 2-4.

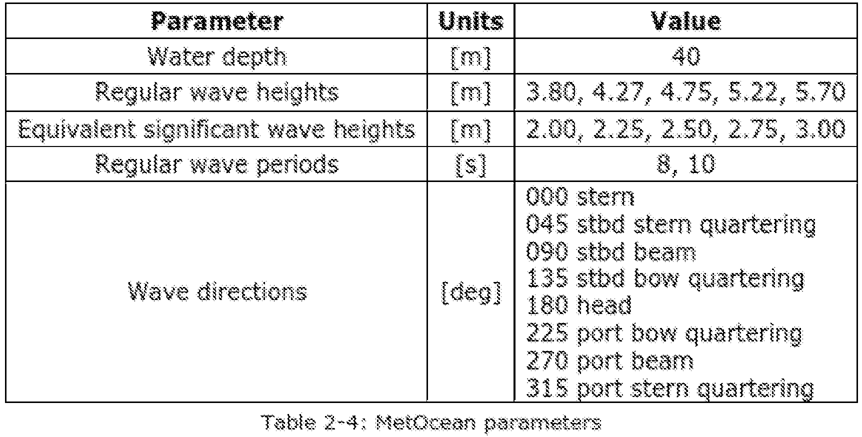

### OrcaFlex models

A quasi-static methodology is used, with zero vessel forward speed / cable payout. Displacement RAOs are used to model the vessel response to waves.

### Comparative example -

*Standard catenary (no tensioner system according to the present invention).*

Modelling was carried out wherein the model was arranged with a static cable departure angle of 7.5 degrees, giving static lay tension and layback distances of 1kN and 20m respectively.

### Example - With tensioner system according to the present invention

Modelling was carried our wherein the model was arranged with a laterally offset tensioner system according to the present invention to keep the AHC connection point close to the vessel stern whilst maintaining an appropriate layback distance from vessel chute to the tensioner system in the plane of the catenary. Key parameters are presented in Table 2-5.

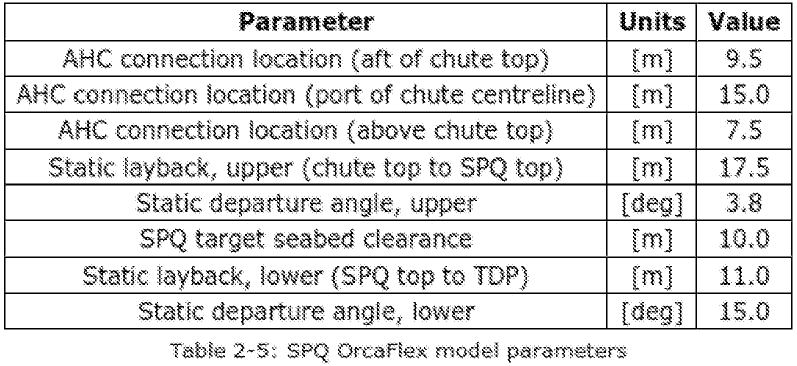

### Results

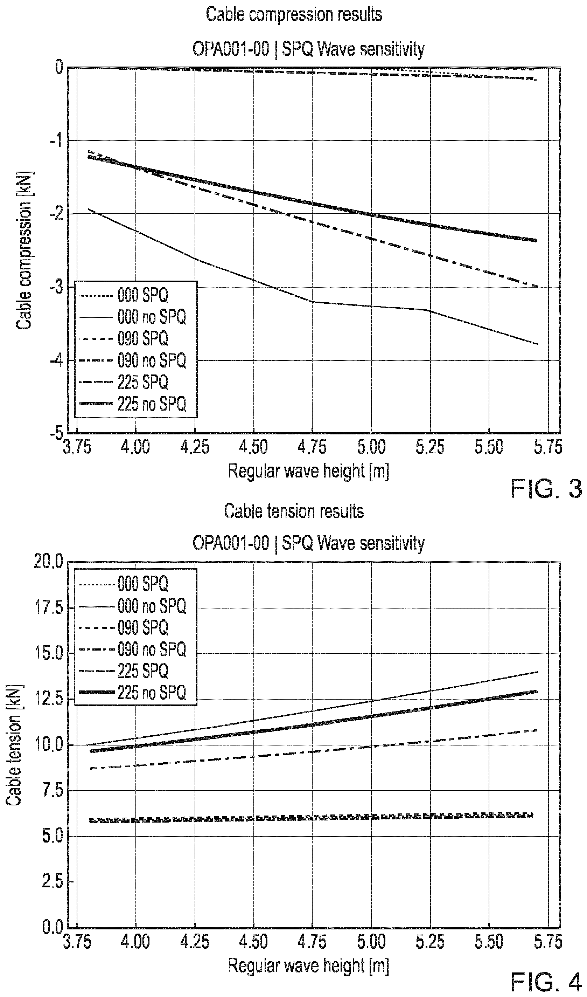

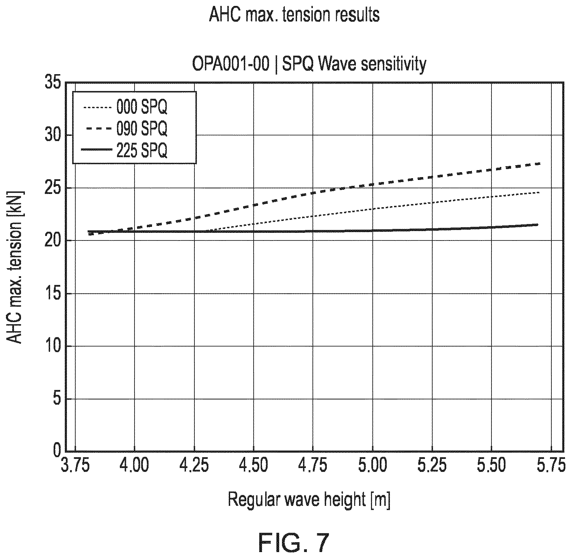

Selected results are plotted in Figures 3 to 7 and discussed hereinafter.

The plotted results cover three wave directions (000, 090, 225 - see Table 2-4) and provide a direction comparison between the standard catenary with no tensioner system (solid lines), and the tensioner system of the present invention (broken lines). The results trends for the presented directions are typical of all analysed cases, with the tensioner system offering significantly improved cable loads as the wave height increases.

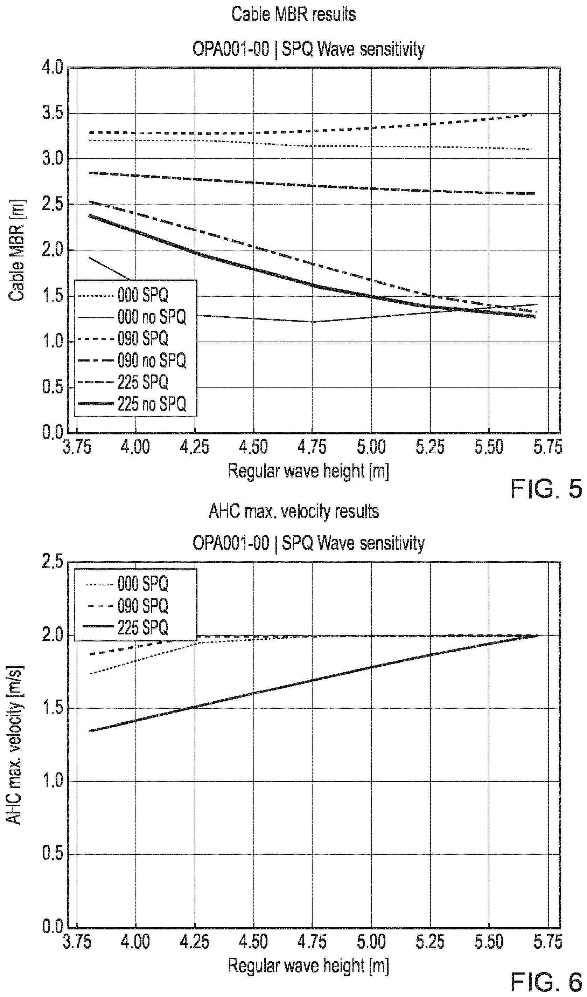

Cable tensions (see Figure 4), are generally quite low both with and without the tensioner system due to the reasonably steep catenary departure angles. The tensioner system being supported by an Active Heave Compensated (AHC) system means it maintains a stable vertical position in the water column, which is considered to significantly improve the compression (see Figure 3), and MBR, (see Figure 5), compared with the standard catenary having no tensioner system.

Cable MBR is an important parameter for comparison, with limit breaches seen for some wave directions (e.g. 000) at wave heights less than a Hs 2m equivalent with the standard catenary. Conversely, the cable MBR is maintained well above the allowable limit for all analysed cases (up to Hs 3m equivalent) with the tensioner system of the present invention.

The AHC system reaches the pre-defined limiting velocity (2m/s) in a significant number of cases (see Figure 6); but as demonstrated by the cable results, this limited level of compensation is still sufficient to offer significant benefits.

### Conclusions

Preliminary dynamic analysis has been run to provide a proof of concept for a tensioner system according to the present invention. For a typical 3x150 mm² subsea power cable being laid from a barge, the tensioner system offers significant operability improvements (especially up to Hs 3m equivalent) for all considered wave directions, some of which have a workable sea state limit less than Hs 2m with a standard catenary.

## Claims

1. A method of deploying a flexible elongate member into water comprising:
(i) suspending a tensioner system (10) underwater from a winch apparatus (17), the winch apparatus (17) mounted on a deployment frame (13) which is in turn mounted on a vessel (15) on the water;
(ii) the winch apparatus (17) having active heave compensation to at least in part, offset movement of the vessel (15) in the water, and reduce the movement of the tensioner system (10) relative to the vessel;
(iii) feeding the elongate member from above the water to under the water and into, through and out of the tensioner system (10), thus deploying the elongate member under the water.

2. A method as claimed in claim 1, wherein the elongate member comprises a cable (18).

3. A method as claimed in claim 1 or claim 2, wherein the tensioner system (10) is suspended between 10m above the seabed and 10m below the surface.

4. A method as claimed in any preceding claim, wherein the method includes laying the elongate member on or in the seabed, optionally including using underwater acoustic positioning for positioning the tensioner system (10) underwater.

5. A method as claimed in any preceding claim, including deploying the flexible elongate member in an S-lay configuration.

6. A method as claimed in any preceding claim, wherein the tensioner system includes a drive means for driving the elongate member from an entry to an exit thereof, optionally wherein the tensioner system includes a motor for driving the drive means.

7. A method as claimed in any preceding claim, wherein the tensioner system includes an angle entry sensor (12) to determine the movement and/or angle of the elongate member relative to the tensioner system at the entry.

8. A method as claimed in any preceding claim, wherein the tensioner system includes an angle exit sensor (14) to determine the movement and/or angle of the elongate member relative to the tensioner system at the exit.

9. A method as claimed in any preceding claim, wherein the tensioner system includes an arcuate entry chute (11a) for resisting the elongate member from exceeding a minimum bend radius as it enters the elongate member entry.

10. A method as claimed in any preceding claim, wherein the tensioner system includes an arcuate exit chute (11b) for resisting the elongate member from exceeding a minimum bend radius as it exits the elongate member entry.

11. A tensioner system (10) suitable for use underwater having a tensioner comprising:
- an elongate member entry;
- an elongate member exit;
- drive means for driving an elongate member from said entry to said exit;
a motor for driving the drive means, and
further comprising an angle entry sensor (12) to determine the movement and/or angle of the elongate member relative to the tensioner system at the entry, and/or an angle exit sensor (14) to determine the movement and/or angle of the elongate member relative to the tensioner system (10) at the exit.

12. A tensioner system as claimed in claim 11 comprising an arcuate entry chute (11a) for resisting the elongate member from exceeding a minimum bend radius as it enters the elongate member entry, optionally comprising an arcuate exit chute (11b) for resisting the elongate member from exceeding a minimum bend radius as it exits the elongate member entry.

13. A tensioner system as claimed in any one of claims 11 to 12 comprising subsea thrusters (24).

14. A tensioner system as claimed in any one of claims 11 to 13 comprising at least one of a camera, a light, a sonar device, a gyroscope and a compass.

15. A tensioner system as claimed in any one of claims 11 to 14 wherein the drive means comprises a two-track tensioner, optionally wherein the drive means comprises a wheel-pair tensioner, optionally wherein the drive means and motor are provided in a watertight housing, optionally comprising a hydraulic motor to drive the drive means, the hydraulic motor including a pressure compensator, optionally comprising obstacle avoidance sonar configured to adjust the tensioner system position in use in response to detected obstacles.

## Patentansprüche

1. Verfahren zum Einsatz eines flexiblen länglichen Elements in Wasser, umfassend:
(i) Aufhängen eines Spannsystems (10) unter Wasser an einer Windenvorrichtung (17), wobei die Windenvorrichtung (17) an einem Einsatzrahmen (13) montiert ist, der wiederum an einem Schiff (15) auf dem Wasser montiert ist;
(ii) wobei die Windenvorrichtung (17) aktive Seegangskompensation aufweist, um Bewegung des Schiffes (15) in dem Wasser zumindest teilweise zu versetzen und die Bewegung des Spannsystems (10) relativ zu dem Schiff zu reduzieren;
(iii) Zuführen des länglichen Elements von über dem Wasser unter das Wasser und in das, durch das und aus dem Spannsystem (10), wodurch das längliche Element unter dem Wasser eingesetzt wird.

2. Verfahren nach Anspruch 1, wobei das längliche Element ein Kabel (18) umfasst.

3. Verfahren nach Anspruch 1 oder Anspruch 2, wobei das Spannsystem (10) zwischen 10 m über dem Meeresboden und 10 m unter der Oberfläche aufgehängt ist.

4. Verfahren nach einem vorhergehenden Anspruch, wobei das Verfahren Legen des länglichen Elements auf oder in den Meeresboden beinhaltet, optional beinhaltend Verwenden von akustischer Unterwasserpositionierung zum Positionieren des Spannsystems (10) unter Wasser.

5. Verfahren nach einem vorhergehenden Anspruch, beinhaltend Einsetzen des flexiblen länglichen Elements in einer S-Legekonfiguration.

6. Verfahren nach einem vorhergehenden Anspruch, wobei das Spannsystem ein Antriebsmittel zum Antreiben des länglichen Elements von einem Eintritt zu einem Austritt davon beinhaltet, wobei optional das Spannsystem einen Motor zum Antreiben des Antriebsmittels beinhaltet.

7. Verfahren nach einem vorhergehenden Anspruch, wobei das Spannsystem einen Winkeleintrittssensor (12) beinhaltet, um die Bewegung und/oder den Winkel des länglichen Elements relativ zu dem Spannsystem an dem Eintritt zu bestimmen.

8. Verfahren nach einem vorhergehenden Anspruch, wobei das Spannsystem einen Winkelaustrittssensor (14) beinhaltet, um die Bewegung und/oder den Winkel des länglichen Elements relativ zu dem Spannsystem an dem Austritt zu bestimmen.

9. Verfahren nach einem vorhergehenden Anspruch, wobei das Spannsystem eine bogenförmige Eintrittsrutsche (11a) beinhaltet, um dem länglichen Element zu widerstehen, dass es einen minimalen Biegeradius überschreitet, wenn es in den Eintritt des länglichen Elements eintritt.

10. Verfahren nach einem vorhergehenden Anspruch, wobei das Spannsystem eine bogenförmige Austrittsrutsche (11b) beinhaltet, um dem länglichen Element zu widerstehen, dass es einen minimalen Biegeradius überschreitet, wenn es aus dem Eintritt des länglichen Elements austritt.

11. Spannsystem (10), das zur Verwendung unter Wasser geeignet ist und einen Spanner aufweist, umfassend:
- einen Eintritt des länglichen Elements;
- einen Austritt des länglichen Elements;
- Antriebsmittel zum Antreiben eines länglichen Elements von dem Eintritt zu dem Austritt;
einen Motor zum Antreiben des Antriebsmittels, und
ferner umfassend einen Winkeleintrittssensor (12), um die Bewegung und/oder den Winkel des länglichen Elements relativ zu dem Spannsystem an dem Eintritt zu bestimmen, und/oder einen Winkelaustrittssensor (14), um die Bewegung und/oder den Winkel des länglichen Elements relativ zu dem Spannsystem (10) an dem Austritt zu bestimmen.

12. Spannsystem nach Anspruch 11, umfassend eine bogenförmige Eintrittsrutsche (11a), um dem länglichen Element zu widerstehen, dass es einen minimalen Biegeradius überschreitet, wenn es in den Eintritt des länglichen Elements eintritt, optional umfassend eine bogenförmige Austrittsrutsche (11b), um dem länglichen Element zu widerstehen, dass es einen minimalen Biegeradius überschreitet, wenn es aus dem Eintritt des länglichen Elements austritt.

13. Spannsystem nach einem der Ansprüche 11 bis 12, umfassend Unterwassertriebwerke (24).

14. Spannsystem nach einem der Ansprüche 11 bis 13, umfassend zumindest eines von einer Kamera, einem Licht, einem Sonargerät, einem Gyroskop und einem Kompass.

15. Spannsystem nach einem der Ansprüche 11 bis 14, wobei das Antriebsmittel einen zweispurigen Spanner umfasst, wobei optional das Antriebsmittel einen Radpaarspanner umfasst, wobei optional das Antriebsmittel und der Motor in einem wasserdichten Gehäuse bereitgestellt sind, optional umfassend einen Hydraulikmotor, um das Antriebsmittel anzutreiben, wobei der Hydraulikmotor einen Druckkompensator beinhaltet, optional umfassend ein Hindernisvermeidungssonar, das konfiguriert ist, um die Spannsystemposition in Verwendung als Reaktion auf erfasste Hindernisse einzustellen.

## Revendications

1. Procédé de déploiement d'un élément allongé souple dans de l'eau comprenant :
(i) la suspension d'un système de tendeur (10) sous l'eau à partir d'un appareil de treuil (17), l'appareil de treuil (17) étant monté sur un cadre de déploiement (13) qui est à son tour monté sur un navire (15) sur l'eau ;
(ii) l'appareil de treuil (17) présentant une compensation de tangage active pour, au moins en partie, décaler un mouvement du navire (15) dans l'eau, et réduire le mouvement du système de tendeur (10) par rapport au navire ;
(iii) l'introduction de l'élément allongé à partir d'au-dessus de l'eau jusqu'à sous l'eau et dans, à travers et hors du système de tendeur (10), déployant ainsi l'élément allongé sous l'eau.

2. Procédé selon la revendication 1, dans lequel l'élément allongé comprend un câble (18).

3. Procédé selon la revendication 1 ou la revendication 2, dans lequel le système de tendeur (10) est suspendu entre 10 m au-dessus du fond marin et 10 m au-dessous de la surface.

4. Procédé selon une quelconque revendication précédente, dans lequel le procédé comprend la pose de l'élément allongé sur ou dans le fond marin, comprenant éventuellement l'utilisation d'un positionnement acoustique sous-marin pour positionner le système de tendeur (10) sous l'eau.

5. Procédé selon une quelconque revendication précédente, comprenant le déploiement de l'élément allongé souple dans une configuration de pose en S.

6. Procédé selon une quelconque revendication précédente, dans lequel le système de tendeur comprend un moyen d'entraînement pour entraîner l'élément allongé à partir d'une entrée vers une sortie de celui-ci, éventuellement dans lequel le système de tendeur comprend un moteur pour entraîner le moyen d'entraînement.

7. Procédé selon une quelconque revendication précédente, dans lequel le système de tendeur comprend un capteur d'entrée d'angle (12) pour déterminer le mouvement et/ou l'angle de l'élément allongé par rapport au système de tendeur au niveau de l'entrée.

8. Procédé selon une quelconque revendication précédente, dans lequel le système de tendeur comprend un capteur de sortie d'angle (14) pour déterminer le mouvement et/ou l'angle de l'élément allongé par rapport au système de tendeur au niveau de la sortie.

9. Procédé selon une quelconque revendication précédente, dans lequel le système de tendeur comprend une goulotte d'entrée arquée (11a) pour empêcher l'élément allongé de dépasser un rayon de courbure minimum lorsqu'il entre dans l'entrée de l'élément allongé.

10. Procédé selon une quelconque revendication précédente, dans lequel le système de tendeur comprend une goulotte de sortie arquée (11b) pour empêcher l'élément allongé de dépasser un rayon de courbure minimum lorsqu'il sort de l'entrée de l'élément allongé.

11. Système de tendeur (10) approprié pour une utilisation sous l'eau présentant un tendeur comprenant :
- une entrée d'élément allongé ;
- une sortie d'élément allongé ;
- un moyen d'entraînement pour entraîner un élément allongé à partir de ladite entrée vers ladite sortie ;
un moteur pour entraîner le moyen d'entraînement, et
comprenant en outre un capteur d'entrée d'angle (12) pour déterminer le mouvement et/ou l'angle de l'élément allongé par rapport au système de tendeur au niveau de l'entrée, et/ou un capteur de sortie d'angle (14) pour déterminer le mouvement et/ou l'angle de l'élément allongé par rapport au système de tendeur (10) au niveau de la sortie.

12. Système de tendeur selon la revendication 11, comprenant une goulotte d'entrée arquée (11a) pour empêcher l'élément allongé de dépasser un rayon de courbure minimum lorsqu'il entre dans l'entrée de l'élément allongé, comprenant éventuellement une goulotte de sortie arquée (11b) pour empêcher l'élément allongé de dépasser un rayon de courbure minimum lorsqu'il sort de l'entrée de l'élément allongé.

13. Système de tendeur selon l'une quelconque des revendications 11 à 12, comprenant des propulseurs sous-marins (24).

14. Système de tendeur selon l'une quelconque des revendications 11 à 13, comprenant au moins l'un d'une caméra, d'une lumière, d'un dispositif sonar, d'un gyroscope et d'une boussole.

15. Système de tendeur selon l'une quelconque des revendications 11 à 14, dans lequel le moyen d'entraînement comprend un tendeur à deux voies, éventuellement dans lequel le moyen d'entraînement comprend un tendeur à paires de roues, éventuellement dans lequel le moyen d'entraînement et le moteur sont prévus dans un boîtier étanche à l'eau, éventuellement comprenant un moteur hydraulique pour entraîner le moyen d'entraînement, le moteur hydraulique comprenant un compensateur de pression, éventuellement comprenant un sonar d'évitement d'obstacle conçu pour ajuster la position du système de tendeur, lors de l'utilisation, en réponse à des obstacles détectés.
